# EUROPEAN PATENT APPLICATION

(11) **EP 3 446 916 A1**
(43) Date of publication of application: **27.02.2019**
(21) Application number: 16902446.0
(22) Date of filing: 20.05.2016
(51) Int. Cl.: B60M 1/28

(54) **EQUIPMENT MONITORING DEVICE, WIRELESS SENSOR, AND COLLECTING STATION**

(71) Applicant: Mitsubishi Electric Corporation, Chiyoda-ku Tokyo 100-8310 (JP)
(72) Inventor: AOYAMA, Tetsuya, Tokyo 100-8310 (JP)
(74) Representative: Pfenning, Meinig & Partner mbB
(86) International application number: PCT/JP2016/065018
(87) International publication number: WO 2017/199427

(57) **Abstract**

A facility monitoring device includes: one or more wireless sensors (102 to 104), which are each provided on an object to be monitored, and are each configured to monitor the object to be monitored; and a collecting station (101) configured to receive monitoring information from the wireless sensors (102 to 104). The wireless sensors (102 to 104) each include: a first temperature sensor configured to measure a temperature of an overhead wire serving as the object to be monitored to output first temperature information; a second temperature sensor configured to measure an air temperature around the overhead wire to output second temperature information; an abnormality determination unit configured to determine whether the overhead wire has abnormality based on the first temperature information and the second temperature information, and generate abnormality information only when the abnormality determination unit determines that the overhead wire has the abnormality; and a wireless communication unit configured to transmit the abnormality information generated by the abnormality determination unit to the collecting station (101) .

## Description

### Technical Field

The present invention relates to a facility monitoring device, a wireless sensor, and a collecting station.

### Background Art

As one type of facility monitoring device, there is known a system configured to monitor abnormality of an overhead wire of a railroad. The overhead wire includes a feeder wire, a trolley wire, and a catenary wire.

The temperature of the overhead wire is increased as a current flowing through the overhead wire is increased. Therefore, the abnormality of the overhead wire can be detected by monitoring the temperature of the overhead wire.

In Patent Literature 1, there is a description of a state collecting system for a railroad electrical facility. In the system described in Patent Literature 1, a plurality of electrical facilities are provided along a railroad line, and a wireless sensor capable of measuring temperature information on the overhead wire is mounted to each of those electrical facilities. Further, a reader configured to communicate to/from the wireless sensor is mounted on a train. In this manner, while the train is running, the reader collects the temperature information measured by the wireless sensors.

Further, in Patent Literature 2, there is described a monitoring system configured to collect measurement information independently of the running of the train. In the system described in Patent Literature 2, a wireless tag with a sensor is mounted on each support column or auxiliary facility of a railroad line. In this manner, such a network that information is sequentially transmitted between adjacent wireless tags is established. The wireless tag detects a state of an object to be monitored to output monitoring information. The monitoring information output from the wireless tag is transmitted to a collecting station via the network.

### Citation List

### Patent Literature

[PTL 1] JP 4082762 B2
[PTL 2] 2014-28535 A

### Summary of Invention

### Technical Problem

In Patent Literature 1, the train has the reader mounted thereon, and hence the measurement information cannot be collected unless the train runs right below the overhead wire serving as an object to be measured. Therefore, there has been a problem in that the abnormality of the overhead wire cannot be checked before the first running of the train. Further, there has been a problem in that it is difficult to check abnormality of a sidetrack, on which a train does not normally run.

Further, Patent Literature 2 has a presupposition that the collecting station collects the information measured by all of the mounted wireless tags. The wireless tags are mounted on a large number of ground facilities installed along the railroad line. Therefore, the number of wireless tags is large. Each wireless tag is driven by a battery. Therefore, the wireless tag is required to reduce power consumption. In general, it is said that reduction of opportunity of wireless transmission is effective to reduce the power consumption. However, in the method of Patent Literature 2, the collecting station acquires the measurement information at a fixed period from all of the wireless tags, and hence there has been a problem in that the power consumption is large.

Further, it is generally known that the temperature of the overhead wire varies depending on air temperature. Therefore, when a determination threshold value for abnormality detection is fixed, there arises a problem in that notification of the abnormality is excessively issued when the air temperature is high. However, Patent Literatures 1 and 2 have no intention of changing the threshold value depending on the air temperature. Therefore, in Patent Literatures 1 and 2, there has been a problem in that, when the air temperature is high, erroneous determination is made, and thus the notification of the abnormality may be excessively issued.

The present invention has been made to solve the above-mentioned problems, and has an object to provide a facility monitoring device capable of collecting information on the entire object to be monitored from a wireless sensor independently of running of a train, preventing erroneous determination due to air temperature variation, and reducing power consumption, and to provide a wireless sensor and a collecting station.

### Solution to Problem

According to one embodiment of the present invention, there is provided a facility monitoring device including: one or more wireless sensors, which are each provided on an object to be monitored, and are each configured to detect abnormality of the object to be monitored to transmit abnormality information; and a collecting station configured to receive the abnormality information from the one or more wireless sensors, the one or more wireless sensors each including: a first temperature sensor configured to measure a temperature of the object to be monitored to output first temperature information; a second temperature sensor configured to measure an air temperature around the object to be monitored to output second temperature information; an abnormality determination unit configured to determine whether the object to be monitored has abnormality based on the first temperature information and the second temperature information, and generate the abnormality information only when the abnormality determination unit determines that the object to be monitored has the abnormality; and a wireless communication unit configured to transmit the abnormality information generated by the abnormality determination unit to the collecting station.

### Advantageous Effects of Invention

According to the facility monitoring device of one embodiment of the present invention, the collecting station acquires the abnormality information from the wireless sensor configured to monitor the object to be monitored, and hence the information on the entire object to be monitored can be collected from the wireless sensor independently of the running of the train. Further, whether or not the temperature of the object to be monitored is abnormal is determined also taking the air temperature into consideration, and hence the erroneous determination due to the air temperature variation can be prevented. Further, information is transmitted to the collecting station only when the abnormality determination unit determines that the temperature of the object to be monitored is abnormal. Therefore, the number of times of transmission is decreased, and thus the power consumption can be reduced.

### Brief Description of Drawings

FIG. 1 is a configuration diagram for illustrating a configuration of a facility monitoring device according to a first embodiment of the present invention.
FIG. 2 is a block diagram for illustrating a hardware configuration of a wireless sensor provided in the facility monitoring device according to the first embodiment of the present invention.
FIG. 3 is a functional configuration diagram for illustrating functions of the wireless sensor provided in the facility monitoring device according to the first embodiment of the present invention.
FIG. 4 is a functional configuration diagram for illustrating functions of a collecting station provided in the facility monitoring device according to the first embodiment of the present invention.
FIG. 5 is a flow chart for illustrating a flow of processing of the wireless sensor provided in the facility monitoring device according to the first embodiment of the present invention.
FIG. 6 is an explanatory diagram for showing an abnormality determination table to be used in the wireless sensor provided in the facility monitoring device according to the first embodiment of the present invention.
FIG. 7 is a flow chart for illustrating a flow of processing of an abnormality detection operation of the collecting station provided in the facility monitoring device according to the first embodiment of the present invention.

### Description of Embodiments

### First Embodiment

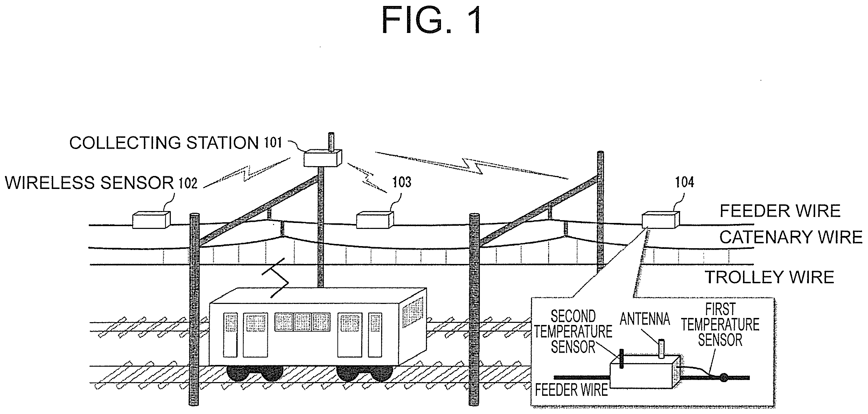

FIG. 1 is an illustration of a facility monitoring device according to a first embodiment of the present invention and an object to be monitored. In the first embodiment, a railroad facility is described as an example of the object to be monitored. The facility monitoring device according to the first embodiment includes, as illustrated in FIG. 1, a collecting station 101 and wireless sensors 102 to 104.

The collecting station 101 is a device configured to receive abnormality information wirelessly transmitted from the wireless sensors 102 to 104. The collecting station 101 is mounted on a support column or an auxiliary facility provided on one side of a railroad line.

The wireless sensors 102 to 104 are provided on an overhead wire. The wireless sensors 102 to 104 monitor the state of the overhead wire to output monitoring information. The overhead wire includes a feeder wire, a trolley wire, and a catenary wire. In the example of FIG. 1, the wireless sensors 102 to 104 are provided on the feeder wire. Further, as illustrated in a partially enlarged diagram of FIG. 1, each of the wireless sensors 102 to 104 includes a first temperature sensor, a second temperature sensor, and an antenna. In the first embodiment, temperature information on the overhead wire, more specifically, temperature information on the feeder wire is described as an example of the monitoring information.

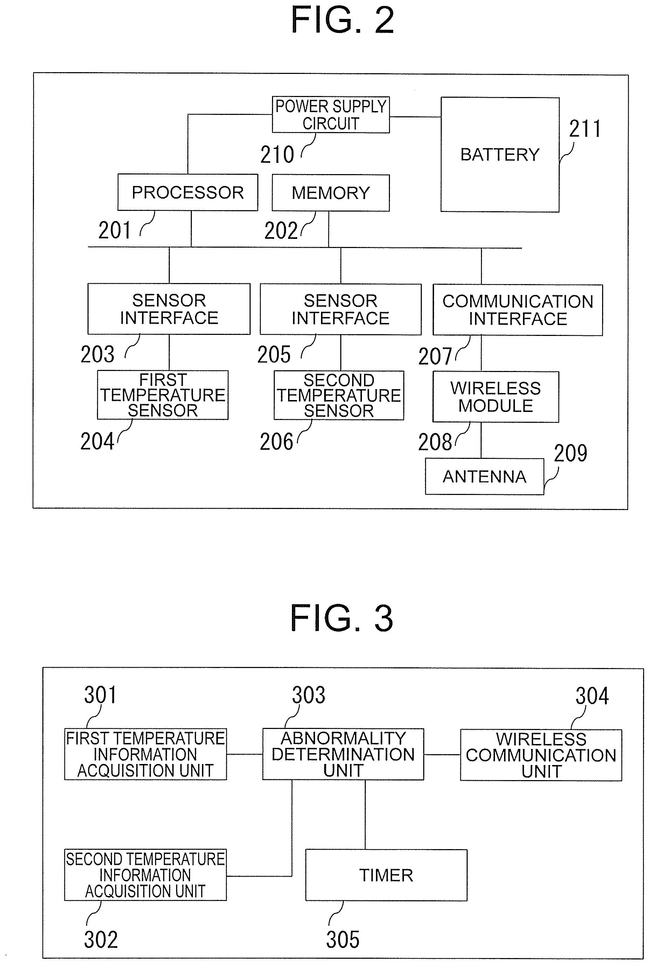

FIG. 2 is an illustration of a hardware configuration of the wireless sensor 102. As illustrated in FIG. 2, the wireless sensor 102 includes a processor 201, a memory 202, a sensor interface 203, a first temperature sensor 204, a sensor interface 205, a second temperature sensor 206, a communication interface 207, a wireless module 208, an antenna 209, a battery 211, and a power supply circuit 210.

The battery 211 is connected to the power supply circuit 210. The battery 211 may be formed of a battery that has been charged in advance, or may be formed of a rechargeable battery that is spontaneously charged by sunlight. The power supply circuit 210 acquires power required for the operation of the wireless sensor 102 from the battery 211.

As illustrated in FIG. 1, the first temperature sensor 204 is mounted on an insulating part of the overhead wire. The first temperature sensor 204 measures the temperature of the overhead wire to output temperature information. The first temperature sensor 204 is connected to the processor 201 via the sensor interface 203 and an internal bus. The first temperature sensor 204 may measure only the temperature of the feeder wire, or may also measure the temperatures of the catenary wire and the trolley wire.

The second temperature sensor 206 is mounted on the outside of a casing of the wireless sensor 102 without being brought into contact with the overhead wire. In FIG. 1, the second temperature sensor 206 is provided on an upper portion of the casing of the wireless sensor 102. The second temperature sensor 206 measures the air temperature around the wireless sensor 102 to output temperature information. The second temperature sensor 206 is connected to the processor 201 via the sensor interface 205 and the internal bus.

The antenna 209 performs wireless communication to/from the collecting station 101. The antenna 209 may be formed of a transmitting antenna, or may be formed of a transmitting and receiving antenna as required.

The processor 201 operates with power supplied from the power supply circuit 210. The processor 201 receives input of the temperature information from the first temperature sensor 204 and the second temperature sensor 206. The processor 201 performs various types of calculation processing in the wireless sensor 102 in accordance with a program stored in the memory 202. The processor 201 stores in the memory 202 results of calculation obtained by the calculation processing and transmits the results from the antenna 209 toward the outside.

FIG. 3 is an illustration of a functional configuration of the wireless sensor 102.

The other wireless sensors 103 and 104 have configurations similar to those illustrated in FIG. 2 and FIG. 3. Therefore, only the configuration of the wireless sensor 102 is described here. As for the configurations of the wireless sensors 103 and 104, FIG. 2 and FIG. 3 are referred to, and description thereof is omitted here.

As illustrated in FIG. 3, the wireless sensor 102 includes a first temperature information acquisition unit 301, a second temperature information acquisition unit 302, an abnormality determination unit 303, a wireless communication unit 304, and a timer 305.

The first temperature information acquisition unit 301 is formed of the first temperature sensor 204 and the sensor interface 203. The first temperature information acquisition unit 301 acquires the temperature information by the first temperature sensor 204 to output the temperature information to the processor 201 via the sensor interface 203.

The second temperature information acquisition unit 302 is formed of the second temperature sensor 206 and the sensor interface 205. The second temperature information acquisition unit 302 acquires the temperature information by the second temperature sensor 206 to output the temperature information to the processor 201 via the sensor interface 205.

The abnormality determination unit 303 determines whether or not the overhead wire has abnormality based on the temperature information obtained from the first and second temperature information acquisition units 301 and 302. When the abnormality determination unit 303 determines that the overhead wire has abnormality, the abnormality determination unit 303 transmits abnormality information to the collecting station 101 via the wireless communication unit 304.

The wireless communication unit 304 is formed of the communication interface 207, the wireless module 208, and the antenna 209, and performs wireless communication to/from the collecting station 101.

The timer 305 measures an elapse of time in order to acquire the temperature information at a fixed period set in advance. The timer 305 outputs a timer signal for each fixed period. When first temperature information acquisition unit 301 and the second temperature information acquisition unit 302 receive the timer signal from the timer 305, the first temperature information acquisition unit 301 and the second temperature information acquisition unit 302 acquire the temperature information from the first temperature sensor 204 and the second temperature sensor 206, respectively.

The abnormality determination unit 303 and the timer 305 are implemented by the processor 201 executing the program stored in the memory 202. Further, a plurality of processors and a plurality of memories may cooperate with each other to implement the above-mentioned functions.

In the memory 202, in addition to the program, a specific identifier assigned to each of the wireless sensors 102 to 104 is stored in advance. When the wireless sensor 102 transmits the abnormality information to the collecting station 101, the wireless sensor 102 also transmits its own identifier together. When the collecting station 101 receives the abnormality information, the collecting station 101 can identify from which wireless sensor the information has been transmitted based on the identifier. The memory 202 is formed of a random access memory (RAM) and a read only memory (ROM).

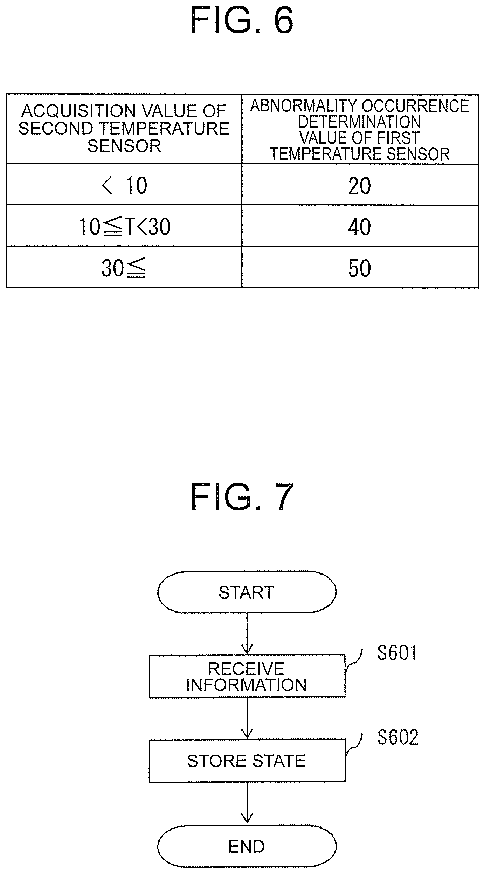

In the first embodiment, the abnormality determination unit 303 stores in advance an abnormality determination table shown in FIG. 6 in the memory 202. In the abnormality determination table, as shown in FIG. 6, a correspondence between the temperature information of the second temperature sensor 206 and an abnormality occurrence determination value of the first temperature sensor 204 is defined in advance. In the example of FIG. 6, when the temperature information of the second temperature sensor 206 is lower than 10°C, the abnormality occurrence determination value of the first temperature sensor 204 is defined as 20°C, and when the temperature information of the second temperature sensor 206 is equal to or higher than 10°C and lower than 30°C, the abnormality occurrence determination value of the first temperature sensor 204 is defined as 40°C. When the temperature information of the second temperature sensor 206 is equal to or higher than 30°C, the abnormality occurrence determination value of the first temperature sensor 204 is defined as 50°C.

When the abnormality determination unit 303 acquires the temperature information from the first temperature sensor 204 and the second temperature sensor 206, the abnormality determination unit 303 acquires the abnormality occurrence determination value of the first temperature sensor 204 based on the temperature information acquired from the second temperature sensor in accordance with the abnormality determination table shown in FIG. 6. The abnormality determination unit 303 compares the abnormality occurrence determination value acquired from the abnormality determination table with the temperature information of the first temperature sensor 204. When the temperature information of the first temperature sensor 204 is equal to or higher than the abnormality occurrence determination value as a result of the comparison, the abnormality determination unit 303 determines that the temperature of the overhead wire is "abnormal" . On the other hand, when the temperature information of the first temperature sensor 204 is lower than the abnormality occurrence determination value, the abnormality determination unit 303 determines that the temperature of the overhead wire is "normal". When the abnormality determination unit 303 determines that the temperature of the overhead wire is "abnormal", the abnormality determination unit 303 transmits, to the collecting station 101, a message including the identifier of the wireless sensor including the own abnormality determination unit 303 and the temperature information obtained by the first and second temperature sensors 204 and 206. In the first embodiment, as described above, whether or not the temperature of the overhead wire is abnormal is determined while switching the abnormality occurrence determination value in accordance with the air temperature. Therefore, erroneous determination and excessive notification due to the air temperature variation can be prevented.

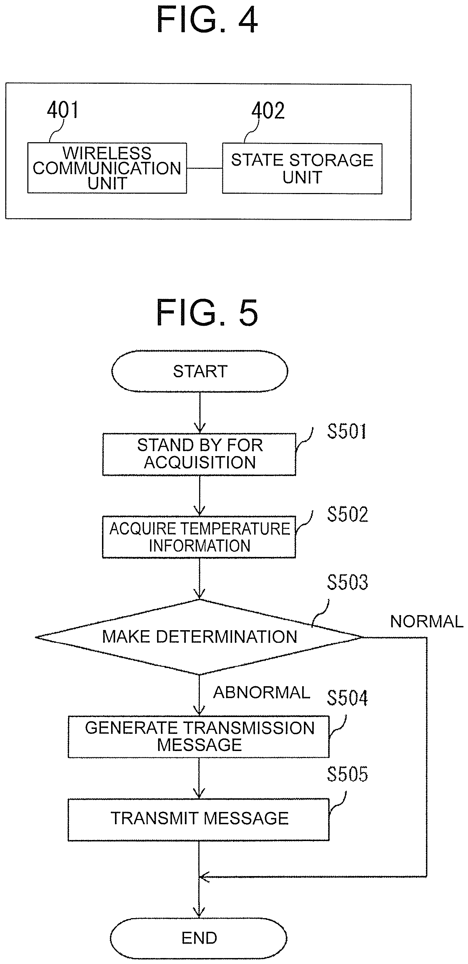

FIG. 4 is an illustration of a configuration of the collecting station 101. The collecting station 101 includes a wireless communication unit 401 and a state storage unit 402.

The wireless communication unit 401 receives the abnormality information from the wireless sensors 102 to 104.

The state storage unit 402 accumulates the abnormality information received from the wireless communication unit 401. When the state storage unit 402 stores the abnormality information, the state storage unit 402 also stores together a reception time/date at which the wireless communication unit 401 has received the abnormality information.

The number of collecting stations 101 and the number of wireless sensors 102 to 104 are not limited to those in the configuration of FIG. 1, and any number of collecting stations 101 and wireless sensors 102 to 104 may be provided.

Next, operations of the wireless sensor 102 and the collecting station 101 are described.

First, the operation of the wireless sensor 102 is described. FIG. 5 is a flow chart for illustrating an abnormality detection operation of the wireless sensor 102.

As illustrated in FIG. 5, the wireless sensor 102 first stands by until the abnormality determination unit 303 receives the timer signal from the timer 305 (Step S501).

When the abnormality determination unit 303 receives the timer signal from the timer 305, the first temperature information acquisition unit 301 and the second temperature information acquisition unit 302 acquire the temperature information measured by the first temperature sensor 204 and the second temperature sensor 206, respectively (Step S502).

Next, the abnormality determination unit 303 determines whether or not the overhead wire has abnormality based on the temperature information measured by the first temperature sensor 204 and the second temperature sensor 206. Specifically, the abnormality determination unit 303 first acquires the abnormality occurrence determination value of the first temperature sensor 204 from the abnormality determination table shown in FIG. 6 based on the temperature information acquired from the second temperature sensor 206. Next, the abnormality determination unit 303 compares the acquired abnormality occurrence determination value with the temperature information acquired from the first temperature sensor 204 to determine whether or not the temperature information acquired from the first temperature sensor 204 falls within a normal range (Step S503). When the abnormality determination unit 303 determines that the temperature information acquired from the first temperature sensor 204 is outside of the normal range, the wireless sensor 102 generates a message for the collecting station 101, which includes the identifier of the wireless sensor 102 and the temperature information (Step S504), and transmits the message to the collecting station 101 to notify the collecting station 101 of the abnormality (Step S505).

This determination is described with a specific example.

For example, when the temperature information acquired from the first temperature sensor 204 is "30°C", and the temperature information acquired from the second temperature sensor 206 is "20°C", in the abnormality determination table shown in FIG. 6, the temperature information of the second temperature sensor 206 falls within the range of "10≤T<30", and hence "40 °C" can be obtained as the abnormality occurrence determination value of the first temperature sensor 204. When "40°C" is compared with "30°C" being the temperature information acquired from the first temperature sensor 204, "30°C" is lower than the abnormality occurrence determination value, and hence it is determined that the temperature information acquired from the first temperature sensor 204 falls within the normal range. When it is determined that the temperature information acquired from the first temperature sensor 204 falls within the normal range, the wireless sensor 102 stands by until the next determination timing without transmitting information to collecting station 101.

Meanwhile, when the temperature information acquired from the first temperature sensor 204 is "45°C", and the temperature information acquired from the second temperature sensor 206 is "20°C", similarly, from the abnormality determination table, "40°C" can be obtained as the abnormality occurrence determination value of the first temperature sensor 204. When "40°C" being the abnormality occurrence determination value is compared with "45°C" acquired from the first temperature sensor 204, "45°C" is higher than the abnormality occurrence determination value, and hence it is determined that the temperature information acquired from the first temperature sensor 204 is abnormal. When it is determined that the temperature information acquired from the first temperature sensor 204 is abnormal, the wireless sensor 102 generates, as a transmission message for the collecting station 101, the abnormality information including the identifier of the wireless sensor 102 and the temperature information (Step S504), and transmits the transmission message to the collecting station 101 to notify the collecting station 101 of the abnormality (Step S505) .

As described above, the wireless sensor 102 determines whether or not the overhead wire has abnormality based on the temperature information measured by the first temperature sensor 204 and the second temperature sensor 206, and only when the wireless sensor 102 determines that the overhead wire has abnormality, the wireless sensor 102 transmits the abnormality information to the collecting station 101.

Next, the operation of the collecting station 101 is described. FIG. 7 is a flow chart for illustrating an abnormality detection operation for the wireless sensor 102.

As illustrated in FIG. 7, when the wireless communication unit 401 acquires the abnormality information from the wireless sensor 102 (Step S601), the collecting station 101 stores the abnormality information in the state storage unit 402 together with the reception time/date (Step S602). In the following, the abnormality information and the reception time/date are collectively referred to as "abnormality information data".

As described above, when the collecting station 101 acquires the abnormality information from the wireless sensor 102, the collecting station 101 stores the abnormality information data in the state storage unit 402. The abnormality information data includes the identifier of the wireless sensor, the temperature information measured by the first temperature sensor 204 and the second temperature sensor 206, and the reception time/date of the collecting station 101. The collecting station 101 transmits the abnormality information data stored in the state storage unit 402 to a maintenance center at which a maintenance worker stays. The maintenance worker can identify the wireless sensor based on the identifier included in the abnormality information data, and hence can recognize at which position and when the abnormality of the overhead wire has been detected. In this manner, the maintenance worker can reliably know whether or not the overhead wire has abnormality as a whole without patrolling the overhead wire. Further, the abnormality information data is transmitted to the maintenance center immediately after the abnormality is detected, and hence the maintenance worker can rapidly deal with the abnormality.

In the above description of the first embodiment, description has been given assuming that the wireless sensor 102 is mounted at a position at which the wireless sensor 102 can directly communicate to/from the collecting station 101. Further, only the operation of the wireless sensor 102 is described, but the wireless sensor 103 and the wireless sensor 104 perform the same operation.

When the wireless sensor 103 and the wireless sensor 104 can directly perform wireless communication to/from the collecting station 101, the wireless sensor 103 and the wireless sensor 104 may operate similarly to the wireless sensor 102. However, when the wireless sensor 103 or the wireless sensor 104 is apart from the collecting station 101, and cannot directly perform wireless communication to/from the collecting station 101, the wireless sensor may transmit information to the collecting station 101 via another wireless sensor, for example, the wireless sensor 102, with use of a known technology such as an ad-hoc network.

Effects obtained by the first embodiment described above are as follows.

In the first embodiment, only when each of the wireless sensors 102 to 104 determines that the overhead wire has abnormality, the abnormality information is transmitted to the collecting station 101. Therefore, the number of times of wireless transmission of the wireless sensors 102 to 104 can be reduced, and thus the power consumption of the wireless sensors 102 to 104 can be reduced.

Further, in the first embodiment, each of the wireless sensors 102 to 104 autonomously performs the determination of abnormality based on the temperature information obtained from the first temperature sensor 204 and the second temperature sensor 206. In this manner, the transmission of erroneous determination and excessive notification due to the air temperature variation can be suppressed on the sides of the wireless sensors 102 to 104.

Further, in the first embodiment, the wireless sensors 102 to 104 are provided to the entire monitoring facility, and further the collecting station 101 is provided in the vicinity of the overhead wire. Therefore, unlike Patent Literature 1 described above, the entire monitoring facility can be monitored independently of the running of the train. Therefore, the abnormality can be checked before the first running of the train, at which the abnormality detection cannot be performed in Patent Literature 1, and abnormality of a sidetrack can also be checked.

### Second Embodiment

A facility monitoring device according to a second embodiment of the present invention is described. The configuration of the facility monitoring device according to the second embodiment is basically the same as that of the first embodiment, and hence FIG. 1 to FIG. 4 are referred to, and detailed description thereof is omitted here. Further, the operation of the collecting station 101 is also the same as the operation of the collecting station 101 of the first embodiment illustrated in FIG. 7, and hence description thereof is also omitted here.

The differences between the first embodiment and the second embodiment reside in that, in the second embodiment, the wireless sensor 102 does not use the abnormality determination table shown in FIG. 6, and the details of the operation of Step S503 of FIG. 5 differ. In the following, the differences from the first embodiment are mainly described.

Also in the second embodiment, the wireless sensor 102 basically operates in accordance with the flow of FIG. 5. Only the details of the operation of Step S503 of FIG. 5 differ from those of the first embodiment. Therefore, in the following, description is given of the operation of the wireless sensor 102 according to the second embodiment with reference to FIG. 5.

As illustrated in FIG. 5, the wireless sensor 102 first stands by until the abnormality determination unit 303 receives the timer signal from the timer 305 (Step S501).

When the abnormality determination unit 303 receives the timer signal from the timer 305, the first temperature information acquisition unit 301 and the second temperature information acquisition unit 302 acquire the temperature information measured by the first temperature sensor 204 and the second temperature sensor 206, respectively (Step S502).

Next, the abnormality determination unit 303 determines whether or not the overhead wire has abnormality based on the temperature information measured by the first temperature sensor 204 and the second temperature sensor 206 (Step S503).

The operation of this determination is described. In the second embodiment, the abnormality determination unit 303 first calculates an absolute value (|T1-T2|) of a difference between temperature information T1 acquired from the first temperature sensor 204 and temperature information T2 acquired from the second temperature sensor 206. Next, the abnormality determination unit 303 compares the absolute value of the difference with a threshold value ΔT set in advance. When it is determined that the absolute value of the difference is smaller than the threshold value ΔT, that is, when ΔT>|T1-T2| is satisfied, the abnormality determination unit 303 determines that the temperature of the overhead wire is normal, and the wireless sensor 102 stands by until the next determination timing without transmitting information to the collecting station 101. On the other hand, when it is determined that the absolute value of the difference is equal to or larger than the threshold value ΔT, that is, when ΔT≤|T1-T2| is satisfied, the wireless sensor 102, specifically, the abnormality determination unit 303 generates a message for the collecting station 101, which includes the identifier of the wireless sensor 102 and the temperature information (Step S504), and transmits the message to the collecting station 101 to notify the collecting station 101 of the abnormality (Step S505).

This determination is described with a specific example.

For example, when the temperature information acquired from the first temperature sensor 204 is "30°C", and the temperature information acquired from the second temperature sensor 206 is "20°C", the absolute value (|T1-T2|) of the difference is "10°C". At this time, the threshold value ΔT is set to, for example, "15°C" in advance. When "10°C" is compared with "15°C" being the threshold value ΔT, "10°C" is smaller than the threshold value ΔT, and hence it is determined that the temperature information acquired from the first temperature sensor 204 falls within a normal range. When it is determined that the temperature information acquired from the first temperature sensor 204 falls within the normal range, the wireless sensor 102 stands by until the next determination timing without transmitting information to collecting station 101.

Meanwhile, when the temperature information acquired from the first temperature sensor 204 is "45°C", and the temperature information acquired from the second temperature sensor 206 is "20°C", the absolute value (|T1-T2|) of the difference is "25°C". At this time, when "25°C" is compared with "15°C" being the threshold value ΔT, "25°C" is larger than the threshold value ΔT, and hence it is determined that the temperature information acquired from the first temperature sensor 204 is abnormal. When it is determined that the temperature information acquired from the first temperature sensor 204 is abnormal, the wireless sensor 102 generates, as a transmission message for the collecting station 101, the abnormality information including the identifier of the wireless sensor 102 and the temperature information (Step S504), and transmits the transmission message to the collecting station 101 to notify the collecting station 101 of the abnormality (Step S505) .

As described above, in the second embodiment, the wireless sensor 102 determines whether or not the overhead wire has abnormality based on the temperature information measured by the first temperature sensor 204 and the second temperature sensor 206, and only when the wireless sensor 102 determines that the overhead wire has abnormality, the wireless sensor 102 transmits the abnormality information to the collecting station 101.

As illustrated in FIG. 7, when the collecting station 101 acquires the abnormality information from the wireless sensor 102 (Step S601), the collecting station 101 stores the abnormality information in the state recording unit together with the reception time (Step S602).

As described above, also in the second embodiment, effects similar to those in the first embodiment can be obtained.

In the first and second embodiments, description has been given assuming that the wireless sensors 102 to 104 are to be mounted to the feeder wire, but the wireless sensors 102 to 104 may be mounted to other overhead wires such as the trolley wire and the catenary wire, or on a third rail of the railroad facility. Similar effects can be obtained also in this case.

Further, in the first and second embodiments, description has been given of an example of a railroad facility as the facility of the object to be monitored, but the present invention is not limited to the railroad facility. The facility monitoring devices according to the first and second embodiments are applicable as long as the facility can detect the abnormality based on the temperature change. Similar effects can be obtained also in this case. Examples of such a facility include a power transmission line or a power distribution line of power supply facility. Therefore, the facility monitoring devices according to the first and second embodiments of the present invention are applicable also to the power transmission line and the power distribution line of the power supply facility, and similar effects can be obtained also in this case.

## Claims

1. A facility monitoring device, comprising:
one or more wireless sensors, which are each provided on an object to be monitored, and are each configured to detect abnormality of the object to be monitored to transmit abnormality information; and
a collecting station configured to receive the abnormality information from the one or more wireless sensors,
the one or more wireless sensors each including:
a first temperature sensor configured to measure a temperature of the object to be monitored to output first temperature information;
a second temperature sensor configured to measure an air temperature around the object to be monitored to output second temperature information;
an abnormality determination unit configured to determine whether the object to be monitored has abnormality based on the first temperature information and the second temperature information, and generate the abnormality information only when the abnormality determination unit determines that the object to be monitored has the abnormality; and
a wireless communication unit configured to transmit the abnormality information generated by the abnormality determination unit to the collecting station.

2. The facility monitoring device according to claim 1, wherein the collecting station includes:
a wireless communication unit configured to acquire the abnormality information from the one or more wireless sensors; and
a state storage unit configured to store the abnormality information acquired by the wireless communication unit.

3. The facility monitoring device according to claim 1 or 2,
wherein the abnormality determination unit stores in advance an abnormality determination table, in which a correspondence between the second temperature information and an abnormality occurrence determination value with respect to the first temperature information is defined in advance,
wherein the abnormality determination unit is configured to, when the abnormality determination unit acquires the first temperature information and the second temperature information from the first temperature sensor and the second temperature sensor, respectively:
acquire the abnormality occurrence determination value with respect to the first temperature information from the abnormality determination table based on the second temperature information;
compare the abnormality occurrence determination value acquired from the abnormality determination table with the first temperature information;
determine that the object to be monitored is free from abnormality when the first temperature information is lower than the abnormality occurrence determination value; and
determine that the object to be monitored has abnormality when the first temperature information is equal to or higher than the abnormality occurrence determination value.

4. The facility monitoring device according to claim 1 or 2, wherein the abnormality determination unit is configured to, when the abnormality determination unit acquires the first temperature information and the second temperature information from the first temperature sensor and the second temperature sensor, respectively:
calculate an absolute value of a difference between the first temperature information and the second temperature information;
compare the absolute value of the difference with a threshold value;
determine that the object to be monitored is free from abnormality when the absolute value of the difference is smaller than the threshold value; and
determine that the object to be monitored has abnormality when the absolute value of the difference is equal to or larger than the threshold value.

5. The facility monitoring device according to any one of claims 1 to 4, wherein the object to be monitored, at which the temperature is to be measured by the first temperature sensor, includes an overhead wire of a railroad facility.

6. The facility monitoring device according to any one of claims 1 to 4, wherein the object to be monitored, at which the temperature is to be measured by the first temperature sensor, includes a third rail of a railroad facility.

7. The facility monitoring device according to any one of claims 1 to 4, wherein the object to be monitored, at which the temperature is to be measured by the first temperature sensor, includes a power transmission line or a power distribution line of a power supply facility.

8. A wireless sensor, which is provided on an object to be monitored, and is configured to detect abnormality of the object to be monitored to transmit abnormality information, the wireless sensor including one or more wireless sensors,
the wireless sensor comprising:
a first temperature sensor configured to measure a temperature of the object to be monitored to output first temperature information;
a second temperature sensor configured to measure an air temperature around the object to be monitored to output second temperature information;
an abnormality determination unit configured to determine whether the object to be monitored has abnormality based on the first temperature information and the second temperature information, and generate the abnormality information only when the abnormality determination unit determines that the object to be monitored has the abnormality; and
a wireless communication unit configured to transmit the abnormality information generated by the abnormality determination unit to outside.

9. A collecting station, which is configured to receive abnormality information from one or more wireless sensors, which are each provided on an object to be monitored, and are each configured to detect abnormality of the object to be monitored to transmit the abnormality information,
the collecting station comprising:
a wireless communication unit configured to acquire the abnormality information from the one or more wireless sensors; and
a state storage unit configured to store the abnormality information acquired by the wireless communication unit.
